# EUROPÄISCHE PATENTANMELDUNG

(11) **EP 1 489 395 A1**
(43) Veröffentlichungstag der Anmeldung: **22.12.2004**
(21) Anmeldenummer: 04013441.3
(22) Anmeldetag: 08.06.2004
(51) Int. Cl.: G01J 3/50, G06K 7/12

(54) **Optoelektronischer Kontrastsensor**

(30) Priorität: 18.06.2003 DE 10327392
(71) Anmelder: SICK AG, 79183 Waldkirch (DE)
(72) Erfinder: Torabi, Bahram , Dr., 79106 Freiburg (DE)
(74) Vertreter: Ludewigt, Christoph

(57) **Zusammenfassung**

Die Erfindung betrifft ein Verfahren für einen optoelektronischen Kontrastsensor zum Detektieren einer farbigen Markierung auf einem Markenträger. Der Kontrastsensor sendet Licht unterschiedlicher spektraler Zusammensetzung auf einen gemeinsamen Lesebereich. Das von der Marke bzw. dem Markenträger aus dem Lesebereich zurückgeworfene Licht wird von einem Lichtempfänger in ein elektrisches Signal transferiert und einer Auswerteschaltung zugeführt. Zum Detektieren der Marke bzw. des Markenträgers werden die Lichtsender sequenziell einzeln und/oder in wechselnder Kombination paarweise bzw. mehrere gleichzeitig angesteuert und dabei der Lichtsender bzw. die Lichtsenderkombination ermittelt, die den besten Kontrast zwischen Marke und Markenträger darstellt.

## Beschreibung

Die Erfindung betrifft ein Verfahren für einen optoelektronischen Kontrastsensor zum Detektieren einer farbigen Markierung auf einem Markenträger. Der Kontrastsensor sendet Licht unterschiedlicher spektraler Zusammensetzung auf einen gemeinsamen Lesebereich. Das von der Marke bzw. dem Markenträger aus dem Lesebereich zurückgeworfene Licht wird von einem Lichtempfänger in ein elektrisches Signal transferiert und einer Auswerteschaltung zugeführt.
Weiterhin betrifft die Erfindung einen optoelektronischen Kontrastsensor, der in einem gemeinsamen Gehäuse eine Ansteuerelektronik zum Betrieb mehrerer Lichtsender unterschiedlicher spektraler Emissionen, einen Lichtempfänger sowie eine Auswerteschaltung aufweist.

Der Begriff "Licht" ist dabei nicht auf das sichtbare Licht beschränkt. Unter "Licht" sind allgemein elektromagnetische Strahlen, also UV-Licht, IR-Licht sowie sichtbares Licht, zu verstehen, welche üblicherweise für den Betrieb optoelektronischer Sensoren eingesetzt werden können.

Derartige optoelektronische Kontrastsensoren werden zum Beispiel bei Folienschweißvorrichtungen oder in der Verpackungstechnik eingesetzt. Dazu werden auf den Folien oder dem Verpackungsmaterial farbige Markierungen aufgebracht, die der optoelektronische Kontrastsensor während der Bewegung des zu verarbeitenden Materials abtastet. Diese Marken, die zum Beispiel durch Druck auf dem Markenträger, d. h. dem Verpackungsmaterial aufgebracht wurden, werden aufgrund ihres gegenüber dem Markenträger spektral unterschiedlichen Remissionsverhaltens vom Kontrastsensor erkannt und können somit zur Steuerung und/oder Regelung von Maschinen oder Handhabungsrobotem benutzt werden.

Der Einsatz dieser optoelektronischen Kontrastsensoren findet aber auch in vielen anderen Anwendungen statt. Hinzuweisen ist dabei insbesondere auf die Überwachung von Druck- und Beschichtungsprozessen oder auf den Bereich von Etiketten-, Banderolen- oder Zeichenerkennung.

Damit mit einem optoelektronischen Kontrastsensor die Remissionsunterschiede aufgrund der unterschiedlichen Farbgebung von Marke und Markenträger erkannt werden kann, müssen diese Kontrastsensoren über eine Farbauflösung verfügen. Dafür sind grundsätzlich zwei Lösungsansätze bekannt. Die erste Lösung sieht vor, mit einem spektral breitbandigen Lichtsender, zweckmäßigerweise einer weißen Lichtquelle, den Lesebereich auszuleuchten und anschließend das an der Marke bzw. dem Markenträger remittierte Licht mit mehreren Lichtempfängem unterschiedlicher spektraler Empfindlichkeit aufzunehmen. Zu diesem Zweck sind beispielsweise zwei oder mehrere Lichtempfänger vorhanden, die durch eine optische Befilterung oder Beschichtung nur Licht einer bestimmten Wellenlänge empfangen können und deshalb in Abhängigkeit von der Farbe der Marke/des Markenträgers unterschiedliche Signale liefern. Es ist auch bekannt, das im Lesebereich remittierte Licht zum Beispiel in einem Monochromator in seine spektralen Einzelteile zu zerlegen und dann einer Vielzahl einzelner Lichtempfänger zuzuführen.
Der zweite bekannte Lösungsweg besteht darin, den Lesebereich zeitlich versetzt mit mehreren unterschiedlichen spektral schmalbandigen Lichtsendern nacheinander zu beleuchten und das jeweils remittierte Licht somit, ebenfalls zeitlich versetzt, einem gemeinsamen spektral breitbandigen Lichtempfänger zuzuführen.

In beiden Fällen ist es somit möglich, eine Information über die spektrale Eigenschaft von Marke und Markenträgern zu gewinnen.

An den bekannten optoelektronischen Kontrastsensoren mit einer weißen Lichtquelle und mehreren spektral unterschiedlichen Empfängern ist als sehr nachteilig zu sehen, dass diese weißes Licht abstrahlende Lichtquelle eine relativ große Verlustwärme erzeugt, vergleichsweise schnell altert, eine hohe Empfindlichkeit auf Schock- und Vibrationsbelastung aufweist und der Kontrastsensor mit dieser Gleichlichtquelle eine hohe Fremdlichtempfindlichkeit besitzt. Des Weiteren sind durch die Mehrzahl der hier erforderlichen spektral unterschiedlichen Lichtempfänger, gegebenenfalls inklusive ihrer jeweiligen Vorverstärker zur Signalaufarbeitung, die Herstellkosten für Sensoren dieser Art relativ hoch.

Bei den Lösungen mit mehreren unterschiedlichen spektral schmalbandigen Lichtsendern, die jeweils zeitlich versetzt einzeln aktiviert werden, ist bei einer Anzahl von zwei bzw. drei Lichtsendern oft die Farbauflösung beeinträchtigt, weil meist nicht das gesamte Farbspektrum abgedeckt werden kann. Besonders dann, wenn der Schwerpunkt des Remissionsspektrums der Marke oder des Markenträgers nicht mit der Emissionswellenlänge eines Lichtsenders zusammenfällt, ist die Detektionsfähigkeit negativ beeinträchtigt. Dies liegt unter anderem daran, dass wegen mangelnder spektraler Überdeckung des Remissionsspektrums der Marke mit dem Emissionsspektrum des Lichtsenders relativ wenig Licht auf den Lichtempfänger auftrifft. Der Signal-/Rauschabstand bei dieser Kontrastmessung ist dann gering, bzw. nicht mehr auswertbar.
Eine eingeschränkte Farbauflösung, d. h. die Erkennbarkeit einer Mischfarbe bei der Marke/dem Markenträger, ist gegebenenfalls nicht möglich.

Der Erfindung liegt deshalb die Aufgabe zu Grunde, ein Verfahren zum Betrieb eines optoelektronischen Kontrastsensors sowie einen optoelektronischen Kontrastsensor der eingangs erwähnten Art zu schaffen, der über eine hohe Farbauflösung verfügt, gleichzeitig aber robust und betriebssicher arbeitet und unter wirtschaftlichen Gesichtspunkten herstellbar ist.

Zur Lösung dieser Aufgabe sieht die Erfindung vor, dass wechselseitig mehrere spektral unterschiedliche Lichtsender, vorzugsweise eine rote, eine grüne und eine blaue Lumineszenzdiode, den Lesebereich und damit die Marke bzw. den Markenträger ausleuchten. Das aus dem Lesebereich zurückgeworfene Licht wird von einem Lichtempfänger aufgenommen und einer Auswerteschaltung zugeführt. Erfindungsgemäß werden dabei zur Beleuchtung des Markenträgers und oder der Marke wenigstens zwei Lichtsender gleichzeitig aktiviert.

Die im optoelektronischen Kontrastsensor eingebauten Lichtsender auch in wechselnder Kombination paarweise ansteuern zu können, ist insbesondere beim Detektieren jener Farbkontraste von Vorteil, bei denen der beste Kontrast zwischen Marke und Markenträger nicht allein durch eine Farbe erreicht wird, sondern Marke und Markenträger zwei oder mehr Farbanteile aufweisen, die in der Marke bzw. dem Markenträger nicht oder nur weniger vertreten sind.

Immer dann, wenn das Remmissionsspektrum der Marke und des Markenträgers sich so unterscheiden, dass bei den Emissionswellenlängen von mehr als einem Sender gleichgerichtete Kontraste entstehen, erhöht sich durch die gleichzeitige Ansteuerung der betroffenen Sender der Unterschied der remittierten Lichtleistungen von der Marke und dem Markenträger. Der Unterschied der Ausgangssignale bei der Marke und dem Markenträger am Lichtempfänger, welche dem optischen Lichtleistungsunterschied proportional sind, wird demzufolge ebenfalls erhöht, so dass sich der Signal-Rauschabstand auch deutlich verbessert. Der günstigere Signal-Rauschabstand kann zur Verbesserung verschiedener Betriebsparameter eingesetzt werden. So kann zum Beispiel neben der bereits erwähnten Farbauflösung auch der maximale Leseabstand erhöht, oder die Schaltgeschwindigkeit bzw. die Ortsreproduzierbarkeit gesteigert werden.

Beim Betrieb des optoelektronischen Kontrastsensors ist dabei von Vorteil, wenn die jeweiligen Spektralbereiche der einzelnen Lichtsender so gewählt sind, dass der gesamte Wellenlängenbereich möglichst gleichmäßig überdeckt wird. In diesem Fall sind die Bereiche im gesamten Spektralbereich, die nicht durch die Emissionswellenlänge eines der vorhandenen Lichtsender abgedeckt sind, am kleinsten. Damit steigt die Wahrscheinlichkeit, dass sich ein in der Regel breiteres Remissionsspektrum einer Marke/eines Markenträgers zumindest teilweise mit der Emissionswellenlänge eines Lichtsenders überschneidet.

Wenn vor dem eigentlichen Funktionsbetrieb des optoelektronischen Kontrastsensors die spektrale Verteilung des Remissionsspektrums der Marke und des Markenträgers bekannt ist, können in einer vorteilhaften Ausführungsform in einem Testbetrieb die Lichtsender sequenziell einzeln und/oder in wechselnder Kombination paarweise angesteuert werden und die dabei ermittelten optimalen Lichtsender bzw. Lichtsenderkombination gespeichert werden. In diesen Fällen müssen dann in dem nachfolgenden Funktionsbetrieb nur diese gespeicherten Lichtsenderkombinationen verwendet werden. Die dadurch mögliche kürzere Lesezeit kann zum Beispiel zur Steigerung der Bewegungsgeschwindigkeit des Markenträgers und damit zu kürzeren Taktzeiten der gesamten Anlage genutzt werden.

Eine vorteilhafte Weiterbildung der Erfindung sieht vor, dass aus den Empfangssignalen bei der Ansteuerung der Lichtsender im Einzelbetrieb in der Auswerteschaltung rechnerisch ermittelt wird, mit welchem Lichtsenderansteuerungsmodus der beste Kontrast zwischen Marke und Markenträger geliefert wird.

Die Erfindung wird im Folgenden beispielhaft unter Bezugnahme auf die Zeichnung beschrieben.

Es zeigen:
- Fig. 1: eine schematische Ansicht eines optoelektronischen Kontrastsensors.
- Fig. 2: die Draufsicht auf einen beispielhaften Markenträger mit rechteckigen Marken.
- Fig. 3: eine beispielhafte Darstellung mehrerer Emissionsspektren der Lichtsender sowie dem Remissionsspektrum einer Marke und eines Markenträgers.

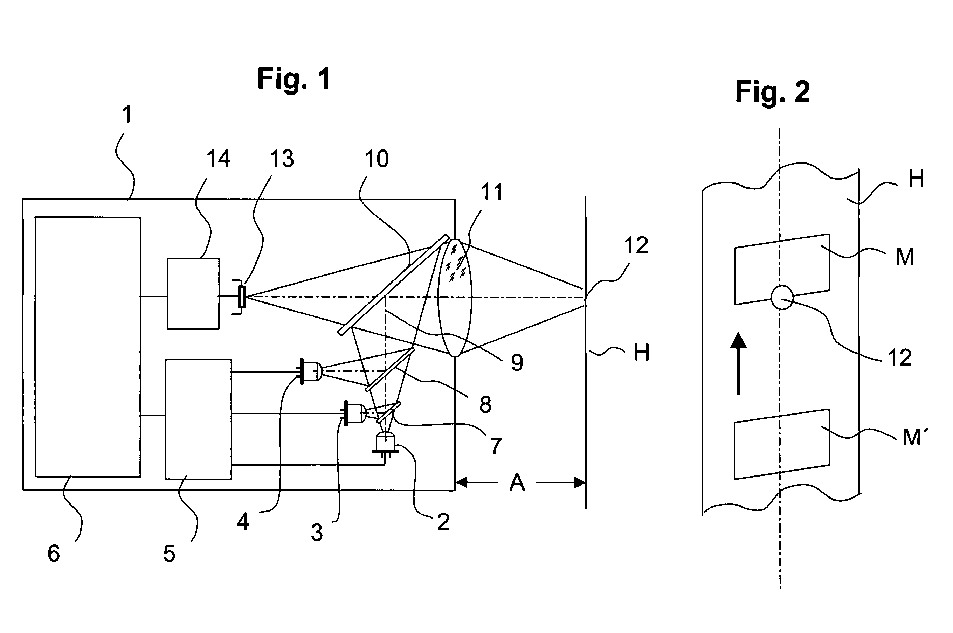

Ein in Fig. 1 gezeigtes optisches Schema eines optoelektronischen Kontrastsensors weist in einem Gehäuse 1 drei Lichtsender 2, 3, 4 für die Farben rot, grün und blau auf. Die Lichtsender 2, 3 und 4, vorzugsweise LED-Halbleiter, sind an eine Ansteuerelektronik 5 angeschlossen, die ihrerseits mit einer Auswerteschaltung 6 verbunden ist. Das von den Lichtsendern 2, 3 und 4 ausgestrahlte Licht wird über die beiden halbdurchlässigen Strahlteilerspiegel 7, 8 zusammengeführt. Die Strahlteilerspiegel 7, 8 sind dabei vorzugsweise als dichroitische Spiegel unter einem Winkel von 45° zu einer optischen Achse 9 angeordnet. Das von den einzelnen Lichtsendem 2, 3, 4 in Richtung der optischen Achse 9 ausgestrahlte Licht wird an einem Strahlteiler 10, der zum Beispiel als farbneutraler halbdurchlässiger Spiegel oder als geometrischer Teilerspiegel ausgeführt ist, um 90° umgelenkt und trifft sodann auf eine Objektivlinse 11. Diese Objektivlinse 11 kann, in Abhängigkeit von der Aufgabe des optoelektronischen Kontrastsensors, sowohl als Einzellinse oder als ein mehrstufiges Abbildungsobjektiv, gegebenenfalls auch als ein Vario-Objektiv ausgeführt sein. Ebenfalls ist es möglich, dass zwischen den Lichtsendern 2, 3, 4 und den beiden halbdurchlässigen Strahlteilerspiegeln 7, 8 noch je eine zusätzliche, hier nicht dargestellte, Kollimatorlinse angeordnet ist. Die Objektivlinse 11 konzentriert das Licht der einzelnen Lichtsender 2, 3, 4 in einem Lesebereich 12, der sich in einem Leseabstand A außerhalb des Gehäuses 1 befindet. In diesem Leseabstand A wird ein Markenträger H am optoelektronischen Kontrastsensor vorbeigeführt.

Auf dem Markenträger H sind eine oder mehrere Marken M, M' aufgebracht, die mit der Bewegung des Markenträgers H durch den Lesebereich 12 bewegt werden. Das Licht der Lichtsender 2, 3, 4 beleuchtet somit sowohl den Markenträger H als auch die Marken M, M'. Das an dem Markenträger H bzw. an den darauf befindlichen Marken remittierte Licht wird zumindest teilweise von der Objektivlinse 11 aufgenommen und durch den Strahlteiler 10 hindurch einem Lichtempfänger 13 zugeführt. Im Lichtempfänger 13 wird das auftreffende Licht in eine der Lichtmenge proportionale elektrische Größe umgewandelt und gegebenenfalls über einen Vorverstärker 14 an die Auswerteschaltung 6 weitergeleitet. Die Ansteuerelektronik 5 aktiviert die Lichtsender 2, 3, 4, d. h. rot, grün sowie blau einzeln nacheinander und/oder in wechselnder Kombination paarweise die Lichtsender rot und grün bzw. rot und blau sowie grün und gelb. Befindet sich eine Marke oder ein Markenträger im Lesebereich 12 des Kontrastsensors, so können am Lichtempfänger 13 nacheinander bis zu 6 verschiedene, aus der Leseebene 12 remittierte, Lichtpegel auftreten. Da neben dem Lichtempfänger 13 auch die Ansteuerelektronik 5 mit der Auswerteschaltung 6 in einem Datenaustausch steht, ist es jederzeit möglich, einen Zusammenhang zwischen dem Empfangssignal und der entsprechenden Beleuchtungswellenlänge herzustellen.

In Fig. 2 ist eine Draufsicht auf einen beispielhaften Markenträger H dargestellt auf dem sich die beiden rechteckigen Marken M, M' befinden. Bei Bewegung des Markenträgers H in Pfeilrichtung werden sowohl die Marken M, M' als auch der Markenträger H durch die Leseebene 12 des optoelektronischen Kontrastsensors geführt. Die Größe und Form der Leseebene 12 ist dabei nicht, wie in Fig. 2 gezeigt, auf einen runden Querschnitt begrenzt, sondern ist zweckmäßigerweise an die Formgebung der Marken M, M' angepasst.

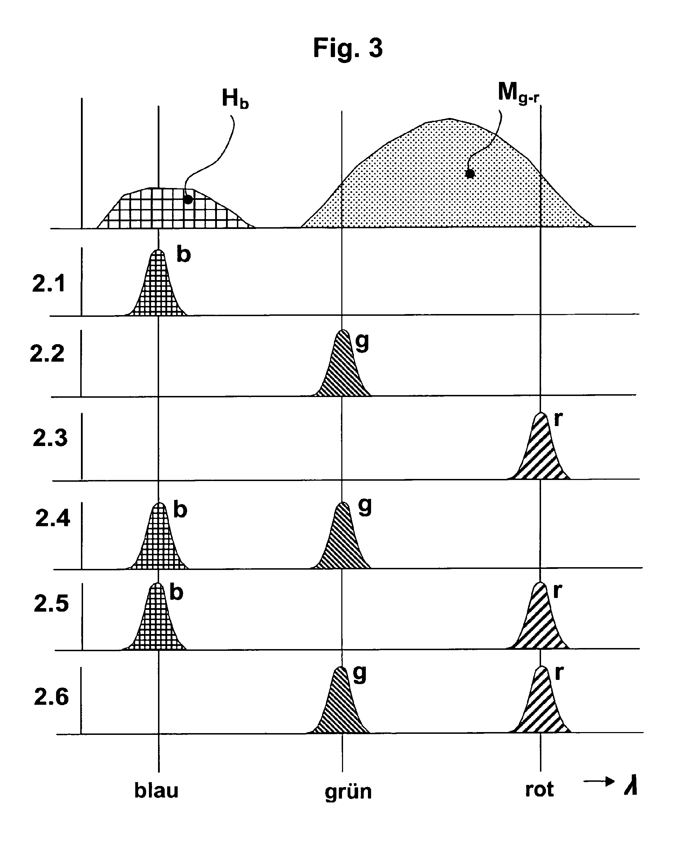

In Fig. 3 ist beispielhaft das Remissionsspektrum H_{b} eines blauen Markenträgers und einer grün-roten Marke M_{g-r} über der Wellenlänge λ dargestellt.
Des Weiteren ist in der Zeile 2.1 das Emissionsspektrum b eines blauen Lichtsenders, in der Zeile 2.2 das Emissionsspektrum g eines grünen Lichtsenders und in der Zeile 2.3 das Emissionsspektrum r eines roten Lichtsenders symbolisch dargestellt. Während sich das Emissionsspektrum b mit dem Remissionsspektrum H_{b} vom Markenträger spektral überdeckt, ist keine Überdeckung mit dem Remissionsspektrum M_{g-r} der grün-roten Marke gegeben. Dies führt dazu, dass der optoelektronische Kontrastsensor bei Beleuchtung mit dem blauen Lichtsender den Markenträger erkennt, während von der grün-roten Marke kein Signal am Lichtempfänger registriert wird. Es ist aber auch aus Fig. 3, Zeile 2.2 ersichtlich, dass das Emissionsspektrum g und das Remissionsspektrum M_{g-r} nicht optimal aufeinander abgestimmt sind, so dass dabei die an der Marke remittierte Lichtmenge gering sein wird, d. h. der Lichtempfänger liefert nur ein sehr schwaches Ausgangssignal.
Etwas günstiger, aber keinesfalls Ideal, sind die Verhältnisse beim Einsatz eines roten Lichtsenders mit dem Emissionsspektrum r, wie in Zeile 2.3 dargestellt.

In der in Fig. 3 skizzierten Aufgabe, bei der eine grün-rote Marke auf einem blauen Markenträger detektiert werden soll, ist es nach der Erfindung von Vorteil, wenn die Lichtsender auch paarweise aktiviert werden können.
Während die in der Zeile 2.4 dargestellte Kombination des blauen und des grünen Lichtsenders ebenso wenig wie die in der Zeile 2.5 dargestellte Kombination des blauen und des roten Lichtsenders, einen Vorteil in der Detektierbarkeit liefert, ist zu erkennen, dass der gleichzeitige Betrieb des grünen und des roten Lichtsenders bei dieser Marke vorteilhaft ist. Die am Lichtempfänger ankommende Lichtmenge ist deutlich höher gegenüber dem jeweiligen Einzelbetrieb dieser beiden Lichtsender.

Der Signalpegel und damit der Abstand zum Signalrauschen am Lichtempfänger bzw. am Ausgang des Vorverstärkers 14 wird deutlich verbessert. In Summe kann aus Fig. 3 erkannt werden, dass im vorliegenden Fall beim Detektieren einer grün-roten Marke auf blauem Markenträger statt dem Einzelbetrieb des blauen Lichtsenders der paarweise Betrieb vom grünen und roten Lichtsender verwendet werden soll.

Analog der in Fig. 3 aufgezeigten Zusammenhänge zwischen den Emissionsspektren der drei Lichtsender b (blau), g (grün) und r (rot) und den Remissionsspektren des Markenträgers H_{b}, bzw. der Marke M_{g-b}, ist es erfindungsgemäß auch vorgesehen, den wirksamen Wellenlängenbereich mit mehr als drei spektral unterschiedlichen Lichtsendern auszuleuchten, d. h. die Emissionsspektren der Lichtsender sind beispielsweise rot, orange, gelb, grün und blau. In Abhängigkeit vom Verlauf der Remissionsspektren des Markenträgers H, bzw. der Marke M, kann beispielsweise der optimale Kontrast dadurch erreicht werden, dass die Marke bzw. der Markenträger H von einem, zwei oder drei verschiedenen Lichtsendern beleuchtet wird.

## Patentansprüche

1. Verfahren zum Betrieb eines optoelektronischen Kontrastsensors zum Detektieren farbiger Markierungen auf einem Markenträger, bei dem wechselseitig mindestens drei Lichtsender mit unterschiedlicher spektraler Emission aktiviert werden und in einem Lesebereich die Beleuchtung des Markenträgers und der Marke bewirken, bei dem das aus dem Lesebereich zurückgeworfene Licht von einem Lichtempfänger aufgenommen und einer Auswerteschaltung zugeführt wird, **dadurch gekennzeichnet, dass** zur Beleuchtung des Markenträgers und/oder der Marke wenigstens zwei Lichtsender gleichzeitig aktiviert werden.

2. Verfahren zum Betrieb eines optoelektronischen Kontrastsensors nach Anspruch 1, **dadurch gekennzeichnet, dass** die Spektralbereiche der einzelnen Lichtsender so gewählt sind, dass der gesamte wirksame Wellenlängenbereich in Form eines gleichmäßigen Rasters überdeckt wird.

3. Verfahren zum Betrieb eines optoelektronischen Kontrastsensors nach einem der vorhergehenden Ansprüche, **dadurch gekennzeichnet, dass** vor der Inbetriebnahme des Kontrastsensors in einem Testbetrieb die Beleuchtung des Markenträgers und/oder der Marke mit wenigstens zwei Lichtsendern in wechselnder Kombination paarweise aktiviert wird und die Lichtsenderkombination gespeichert wird, die den besten Kontrast zwischen Markenträger und Marke hervorgerufen hat.

4. Verfahren zum Betrieb eines optoelektronischen Kontrastsensors nach einem der vorhergehenden Ansprüche, **dadurch gekennzeichnet, dass** aus den Kontrastwerten bei der Ansteuerung der Lichtsender im Einzelbetrieb, in der Auswerteschaltung rechnerisch ermittelt wird, mit welcher Lichtsenderkombination der beste Kontrast von der Marke bzw. dem Markenträger geliefert wird.

5. Optoelektronischer Kontrastsensor zum Detektieren farbiger Markierungen auf einem Markenträger mit mehreren, mindestens drei, in einem Gehäuse angeordneten Lichtsendem mit unterschiedlicher Spektralzusammensetzung, mit einer Ansteuerelektronik zur Aktivierung der Lichtsender und einem Lichtempfänger, welcher das aus dem Lesebereich zurückgeworfene Licht einer Auswerteschaltung zuführt, die, gemeinsam mit der Ansteuerelektronik, das empfangene Licht auswertet, **dadurch gekennzeichnet, dass** die Ansteuerelektronik so ausgebildet ist, dass zur Beleuchtung des Markenträgers und/oder der Marke wenigstens zwei Lichtsender gleichzeitig aktiviert sind.
